# EUROPEAN PATENT SPECIFICATION

(11) **EP 4 522 314 B1**
(45) Date of publication and mention of the grant of the patent: **26.11.2025**
(21) Application number: 24754737.5
(22) Date of filing: 30.07.2024
(51) Int. Cl.: B01D 53/94, B01J 23/22, B01J 29/46, B01J 29/68, B01J 35/00, B01J 35/57, F01N 3/20, B01J 37/02

(54) **CATALYST SYSTEM**
KATALYSATORSYSTEM
SYSTÈME CATALYTIQUE

(30) Priority: 31.07.2023 EP 23188743
(43) Date of publication of application: 19.03.2025
(73) Proprietor: Johnson Matthey Public Limited Company, London EC2V 7AD (GB)
(72) Inventor: ARULRAJ, Kaneshalingam, Royston SG8 5HE (GB); LEPPELT, Rainer, 96257 Redwitz (DE); MUENCH, Joerg, 96257 Redwitz (DE); PIRAS, Irene, 96257 Redwitz (DE); RAJ, Agnes Suganya, Reading RG4 9NH (GB); ZIESMANN, Martin, 96257 Redwitz (DE)
(74) Representative: Johnson Matthey Plc
(86) International application number: PCT/GB2024/052003
(87) International publication number: WO 2025/027315

(56) References cited:
- DE-A1- 102006 031 661
- US-A1- 2018 280 946
- US-A1- 2019 299 198
- OLIVER KROCHER ET AL: "Combination of V 2 O 5 /WO 3 -TiO 2 , Fe-ZSM5, and Cu-ZSM5 Catalysts for the Selective Catalytic Reduction of Nitric Oxide with Ammonia", INDUSTRIAL & ENGINEERING CHEMISTRY RESEARCH, vol. 47, no. 22, 19 November 2008 (2008-11-19), pages 8588 - 8593, XP055094103, ISSN: 0888-5885, DOI: 10.1021/ie800951a

## Description

### Field of the Invention

The present invention relates to a catalyst system suitable for treating an exhaust gas. In particular, the present invention relates to a catalyst system suitable for use in the selective catalytic reduction of nitrogen oxides (NOx) in an exhaust gas.

### Background of the Invention

Large numbers of catalytic converters used for the treatment of emissions from mobile and stationary sources are manufactured each year. Catalytic converters for use in motor-vehicles typically comprise a ceramic honeycomb monolith that is provided with channels for the through-flow of exhaust gases. The channels of the monolith may be coated with a catalytically active material. Alternatively, the monolith itself is an extrusion of a catalytically active material (referred to as an "all-active extrudate" or "extruded catalyst").

The selective catalytic reduction of nitrogen oxides (NOₓ) by ammonia (NH₃-SCR) is considered to be the most practical and efficient technology for the abatement of NOₓ from exhaust gases emitted from stationary sources and mobile engines, principally lean-burn engines, such as diesel engines for vehicles. Typically, exhaust gases from lean burn gas engines have a net oxidizing effect due to the high proportion of oxygen that is provided to ensure adequate combustion of the hydrocarbon fuel. The reduction of NOₓ to N₂ is particularly problematic because the exhaust gas contains enough oxygen to favor oxidative reactions instead of reduction. An SCR process involves the conversion of NOₓ, in the presence of a catalyst and with the aid of a reducing agent, such as ammonia, into elemental nitrogen (N₂) and water. In an SCR process, a gaseous reductant such as ammonia is added to an exhaust gas stream prior to contacting the exhaust gas with the SCR catalyst. The reductant is absorbed onto the catalyst and the NOₓ reduction reaction takes place as the gases pass through or over the catalyzed substrate. The chemical equation for stoichiometric SCR reactions using ammonia is:

4NO + 4NH₃ + O₂ → 4N₂ + 6H₂O

2NO₂ + 4NH₃ + O₂ → 3N₂ + 6H₂O

NO + NO₂ + 2NH₃ → 2N₂ + 3H₂O

Known SCR (selective catalytic reduction) catalysts include vanadium-based catalysts and molecular sieves, such as metal loaded molecular sieves.

A problem associated with the treatment of nitrogen oxides in exhaust gas from lean-burn engines using SCR catalysts is that the ammonia may be oxidized to low-valent nitrogen oxides, especially nitrous oxide (N₂O), due to the high oxygen content in the exhaust gas. This removes the reducing agent required for the SCR reaction from the process on the one hand, and the nitrous oxide escapes as an undesired secondary emission on the other hand. In particular, it has been found that N₂O selectivity increases at higher exhaust gas temperatures.

US2019/0314801 describes a catalyst device for purifying exhaust gases containing nitrogen oxide by means of selective catalytic reduction (SCR), comprising at least two catalytic regions, the first region containing vanadium oxide and cerium oxide, and the second region containing a molecular sieve containing iron. The zeolite is preferably of the BEA type. It is particularly preferred that the catalyst device is designed in such a manner that the exhaust gases initially contact the first region containing the vanadium cerium catalyst, since it is assumed that an exhaust gas fraction reacting with the vanadium cerium catalyst then reacts advantageously with the iron-containing zeolite.

WO 2014/027207 A1 discloses a catalyst composition for treating oxides of nitrogen in exhaust gas derived from a combustion process, such as from an internal combustion engine (whether mobile or stationary), a gas turbine or a coal or oil fired power plant, the catalyst comprising a blend of a first component and second component, wherein the first component is an aluminosilicate or ferrosilicate molecular sieve component and wherein the molecular sieve is either in H+ form or is ion exchanged with one or more transition metals, and the second component is a vanadium oxide supported on a metal oxide support selected from alumina, titania, zirconia, ceria, silica, and combinations thereof.

Ind. Eng. Chem. Res. 47, 2008, p. 8588-8593 by O. Kröcher and M. Elsener discloses catalyst articles comprising an Fe-ZSM cataylst followed by a vanadia/tungsta/titania catalyst.

There remains a need for SCR catalysts which are highly efficient under various conditions. In particular, there is a need for exhaust gas treatment systems that are highly efficient for selective catalytic reduction of NOₓ in combustion engine applications whilst avoiding or suppressing the undesired formation and release of nitrous oxide, particularly at high temperatures.

In a first aspect, the present invention provides a catalyst system for treatment of an exhaust gas comprising:
- a first SCR catalyst comprising an iron (Fe) ion-exchanged molecular sieve having a ferrierite (FER) framework, wherein the first SCR catalyst is provided on or within a substrate comprising an inlet end and an outlet end and having an axial length; and
- a second SCR catalyst comprising vanadium, wherein the second SCR catalyst is provided on or within a substrate comprising an inlet end and an outlet end and having an axial length;
wherein the first and second catalysts are arranged such that in use exhaust gas contacts the first SCR catalyst prior to contact with the second SCR catalyst.

Advantageously, it has been found that the combination of an Fe-loaded FER molecular sieve with a vanadium-based SCR catalyst in the specified configuration may provide improved or comparable NOₓ conversion compared with known systems, whilst also achieving reduced selectivity to N₂O. Additionally, the use of a medium pore molecular sieves in SCR applications may be advantageous compared with conventional large pore BEA; for example, they may provide improved resistance to coking by hydrocarbons, which reduces catalyst performance.

In a second aspect, the present invention provides an exhaust system comprising a source of nitrogen containing reducing agent and the catalyst system of the first aspect.

In a third aspect, the present invention provides a method of treating an exhaust gas comprising contacting a mixture of an exhaust gas comprising nitrogen oxides and a nitrogen containing reducing agent with the catalyst system of the first aspect.

In a fourth aspect, the present disclosure provides the use of the catalyst system of the first aspect for the selective catalytic reduction of nitrogen oxides in an exhaust gas.

In a fifth aspect, the present disclosure provides a vehicle comprising an internal combustion engine and a catalyst system according to the first aspect.

### Brief Description of the Drawings

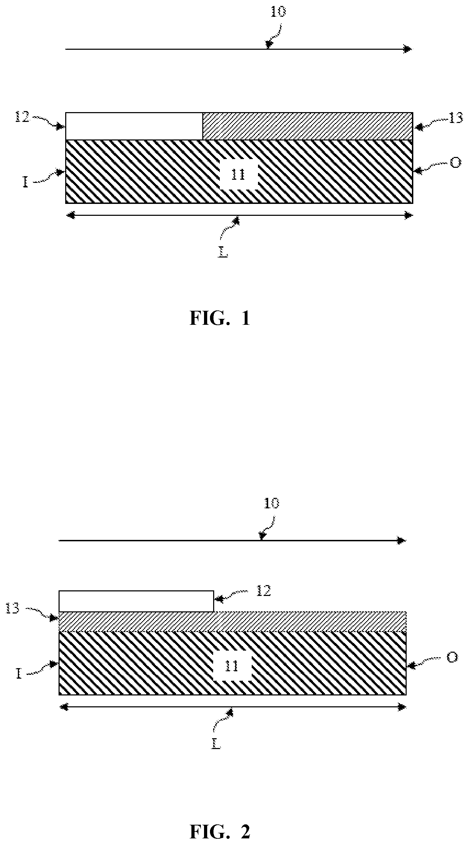

Figures 1 to 5 are schematic representations of examples of catalyst systems as described herein.
Figure 1 depicts a catalyst system comprising a substrate 11 having an axial length L and disposed thereon at an inlet end (I) a first SCR catalyst 12 and disposed thereon at an outlet (O) end a second SCR catalyst 13. When in use, the substrate 11 is oriented so that an exhaust gas (for example, from an engine) enters the catalyst system via the inlet (or upstream) end (I) and exits the catalyst system via the outlet (or downstream) end (O) and the exhaust gas flow is in the direction indicated by the arrow at reference numeral 10.
Figure 2 depicts a catalyst system comprising a substrate 11 having an axial length L and an inlet end (I) and an outlet end (O) end, wherein a second SCR catalyst 13 is disposed on the substrate as a coating along the full axial length L and a first SCR catalyst 12 is disposed as a coating on top of the second SCR catalyst 13 at the inlet end, extending less than 100% of the axial length L. When in use, the substrate 11 is oriented so that exhaust gas enters the catalyst system first via the inlet (or upstream) end (I) and exits the catalyst system via the outlet (or downstream) end (O) and the exhaust gas flow is in the direction indicated by the arrow at reference numeral 10.

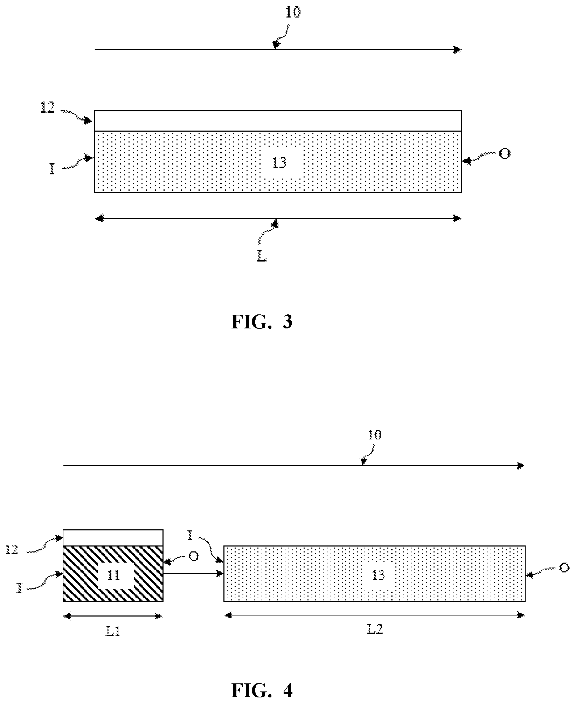

Figure 3 depicts a catalyst system comprising an active substrate 13 which is an extrusion of a second SCR catalyst, having an axial length L and an inlet end (I) and an outlet end (O) end, and a first SCR catalyst 12 is disposed on the active substrate 13 as a coating, extending along the full axial length L. When in use, the substrate 13 is oriented so that exhaust gas enters the catalyst system first via the inlet (or upstream) end (I) and exits the catalyst system via the outlet (or downstream) end (O) and the exhaust gas flow is in the direction indicated by the arrow at reference numeral 10.
Figure 4 depicts a catalyst system comprising a substrate 11 having an axial length L1, having an inlet end (I) and an outlet end (O) end and having a first SCR catalyst 12 disposed on the substrate 11 as a coating along the full axial length L1; and further comprising an active substrate 13 which is an extrusion of a second SCR catalyst, positioned downstream of substrate 11 with respect normal exhaust gas flow through the system, having an axial length L2 and an inlet end (I) and an outlet end (O) end. When in use, the substrate 11 and active substrate 13 are oriented so that exhaust gas enters the catalyst system via the inlet (or upstream) end (I) of substrate 11 and exits the catalyst system via the outlet (or downstream) end (O) of active substrate 13 and the exhaust gas flow is in the direction indicated by the arrow at reference numeral 10.

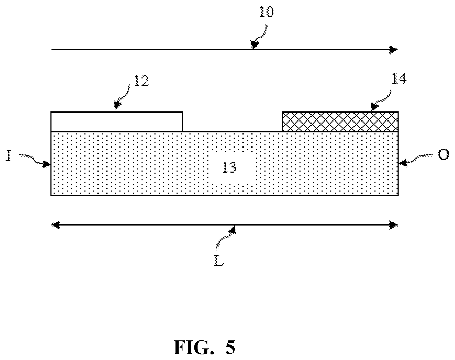

Figure 5 depicts a catalyst system comprising an active substrate 13 which is an extrusion of a second SCR catalyst, having an axial length L and an inlet end (I) and an outlet end (O) end, wherein a first SCR catalyst 12 is disposed on the active substrate 13 as a coating at the inlet end, extending less than 100% of axial length L, and an ASC catalyst 14 is disposed on the active substrate at the outlet end, extending less than 100% of axial length L. When in use, the substrate 13 is oriented so that exhaust gas enters the catalyst system via the inlet (or upstream) end (I) and exits the catalyst system via the outlet (or downstream) end (O) and the exhaust gas flow is in the direction indicated by the arrow at reference numeral 10.

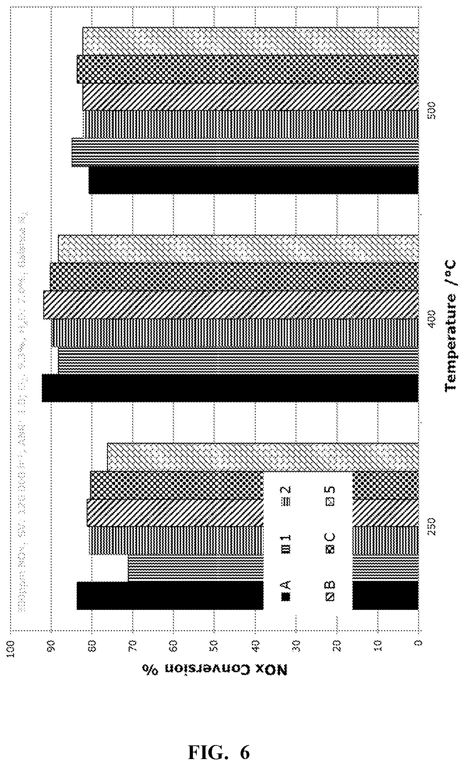

Figure 6 is a graph showing NOₓ conversion achieved by catalyst systems according to the present invention and by comparative catalyst systems.

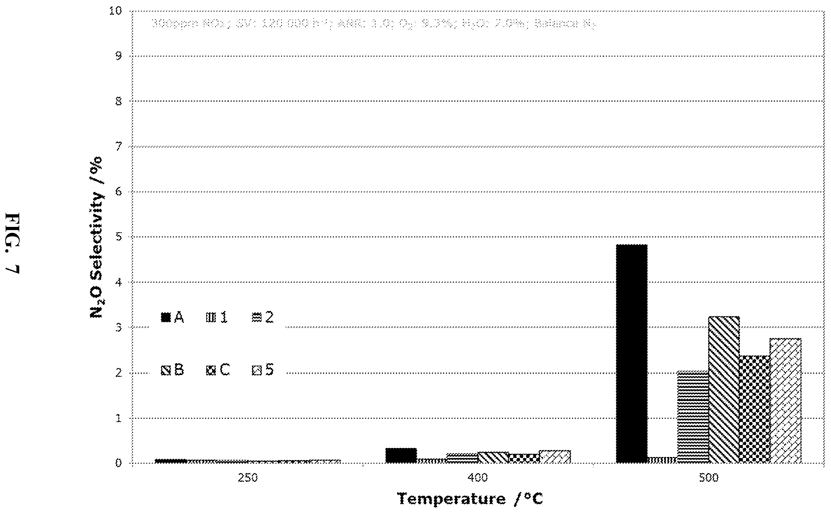

Figure 7 is a graph showing N₂O selectivity achieved by catalyst systems according to the present invention and by comparative catalyst systems.

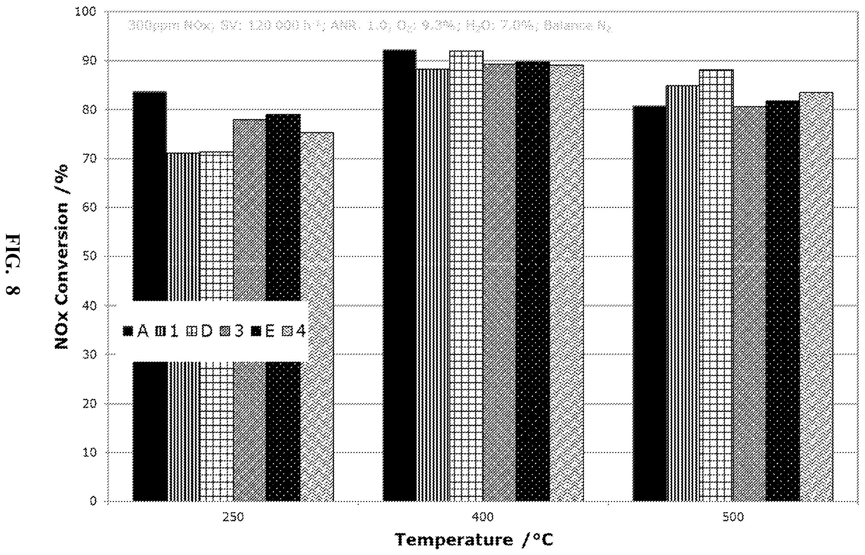

Figure 8 is a graph showing NOₓ conversion achieved by catalyst systems according to the present invention and by comparative catalyst systems.

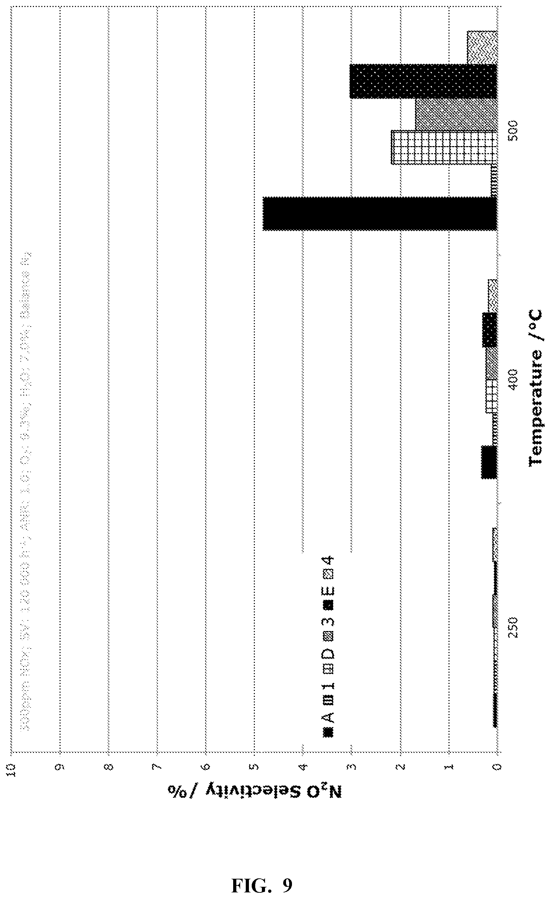

Figure 9 is a graph showing N₂O selectivity achieved by catalyst systems according to the present invention and by comparative catalyst systems.

### Detailed Description

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

Further, the term "comprising" as used herein can be exchanged for the definitions "consisting essentially of" or "consisting of". The term "comprising" is intended to mean that the named elements are essential, but other elements may be added and still form a construct within the scope of the claim. The term "consisting essentially of" limits the scope of a claim to the specified materials or steps and those that do not materially affect the basic and novel characteristic(s) of the claimed invention. The term "consisting of" closes the claim to the inclusion of materials other than those recited except for impurities ordinarily associated therewith.

In the first aspect of the present invention, the first SCR catalyst and the second SCR catalyst are each provided on or within a substrate. The term "provided on or within" as used herein may encompass that the relevant SCR catalyst is disposed on the substrate and/or that the SCR catalysts is present in the substrate, such as in the form of an extruded catalyst formed from an extrudate comprising the SCR composition. The term "disposed on" as used herein may encompass either that the relevant SCR catalyst is directly disposed on the substrate, i.e. with no intervening material, and/or indirectly disposed on the substrate, i.e. with intervening material. If the substrate is porous, then the term "disposed on" may also encompass having the catalytic composition disposed therein, for example within the pores of the substrate, i.e. wherein the catalytic composition is disposed thereon and/or therein, for example, as a washcoat.

The first and second SCR catalysts may be provided on or within the same substrate. Alternatively, the first and second SCR catalysts may be provided on or within separate substrates which may be arranged in series.

The one or more substrates may be monolith substrates. Such monolith substrates have a honeycomb structure, wherein many small, parallel thin-walled channels for the through-flow of exhaust gas run axially through the substrate extending from an inlet end or an outlet end of the substrate. For the avoidance of doubt, the inlet end is the upstream end of the monolith substrate which, when arranged in an exhaust gas treatment system, receives the gas to be treated. The outlet end is the downstream end of the monolith substrate which releases the treated gases.

The one or more substrates may independently be flow-through monolith substrates, wherein each channel is open at both ends and the channels extend through the entire axial length of the substrate. In use, exhaust gas enters a channel at the inlet end and exits the same channel at the outlet end. Alternatively, the one or more monolith substrates may independently be configured as a wall-flow filter, in which some channels are plugged at one end of the article and alternate channels are plugged at the opposite end. In use, exhaust gas enters a channel at the inlet end, then flows through the channel walls, and exits the filter from a different channel at the outlet end.

Where the first and second SCR catalysts are provided on or within the same substrate, the first SCR catalyst may be provided in an upstream zone and the second SCR catalyst may be provided in a downstream zone. In this embodiment, the first SCR catalyst may be disposed on the substrate as a coating extending from the inlet end for less than the axial length and the second SCR catalyst may be disposed on the substrate as a coating extending from the outlet end for less than the axial length (for example, see Figure 1). The coating comprising the first SCR catalyst may extend from the inlet end up to 50% of an axial length of the substrate, more preferably 10 to 30% or 15 to 25% of the axial length of the substrate. The coating comprising the second SCR catalyst may extend from the outlet end up to 90% of an axial length of the substrate, for example 50 to 90%, 60 to 90%, 75 to 85% of the axial length of the substrate. The total axial length of the upstream zone and the downstream zone may be equal to 100% of the axial length of the monolith substrate, however during manufacturing a small overlap may be obtained as the layer coated last overlaps the layer coated first. Alternatively, where the first and second SCR catalysts are provided on or within the same substrate, the first SCR catalyst may be provided as a layer coated on top of the second SCR catalyst. Advantageously, when used in an ammonia-SCR process, this embodiment may benefit from faster transient response compared with other configurations; that is, initiation of the SCR reaction upon dosing with ammonia may occur sooner. It is well known that vanadium-based SCR catalysts achieve faster transient response compared to molecular sieve-based SCR catalysts. Surprisingly, it has now been found that when the first SCR catalyst is provided as a layer on top of the second SCR catalyst, similar transient response times as would be expected from a vanadium SCR catalyst can be achieved. In one embodiment, the second SCR catalyst may be provided as a lower layer applied to the substrate. In particular, the second SCR catalyst may be disposed on the substrate as a coating which extends the full axial length of the substrate monolith and the first SCR catalyst may be disposed on the substrate as a coating extending from the inlet end, on top of the coating comprising the second SCR catalyst (for example, see Figure 2). The coating comprising the first SCR catalyst may extend the full axial length of the substrate monolith or may extend less than 100% of the axial length of the substrate. For example, the coating comprising the first SCR catalyst may extend from the inlet end for 10 to 90% of the axial length of the substrate, preferably 10 to 50%, for example 10 to 35% or 15 to 25% of the axial length of the substrate. In another embodiment, the second SCR catalyst may be incorporated within the substrate itself, in the form of an extruded, all-active catalyst. In particular, the substrate may be an active substrate comprising an extrusion of the second SCR catalyst and the first SCR catalyst may be disposed on the active substrate as a coating (for example, see Figure 3). The coating comprising the first SCR catalyst may extend the full axial length of the active substrate or may extend less than 100% of the axial length of the active substrate, for example, the coating comprising the first SCR catalyst may extend from the inlet end for 10 to 90% of the axial length of the substrate, preferably 10 to 50%, for example 10 to 35% or 15 to 25% of the axial length of the substrate.

Where the first and second SCR catalysts are provided on or within separate substrates, the first SCR catalyst may be provided on or within a first substrate having axial length L1 and the second SCR catalyst may be provided on or within a second substrate having axial length L2, wherein the first substrate is arranged upstream of the second substrate with respect to normal exhaust gas flow through the system (for example, see Figure 4). The first and second substrates may be arranged in series in the exhaust treatment system and may be adjacent to and in contact with each other, or may be separated by a specific distance, provided that they are in fluid communication with each other. The first and second substrates may be of equal axial length. Alternatively, the first and second substrates may have different axial lengths. For example, the ratio of the axial length of the second substrate to the axial length of the first substrate (i.e. L2:L1) may be at least 1.5 to 1 or at least 2:1, such as at least 3:1, at least 5:1, at least 6:1 and may be less than 10:1, such as less than 8:1. Preferably, the ratio of the axial length of the second substrate to the axial length of the first substrate (i.e. L2:L1) is in the range 4:1 to 5:1 or in the range 6:1 to 7:1. The ratio of the axial length of the second substrate to the axial length of the first substrate (i.e. L2:L1) may be about 5:1 or about 6.5:1.

The first SCR catalyst may be disposed on the first substrate as a coating. The coating comprising the first SCR catalyst may extend the full axial length L1 of the first substrate or may extend for less than 100% of the axial length L1. Alternatively, the first SCR catalyst may be incorporated within the first substrate itself, in the form of an extruded, all-active catalyst. In particular, the first substrate may be an active substrate comprising an extrusion of the first SCR catalyst.

The second SCR catalyst may be disposed on the second substrate as a coating. The coating comprising the second SCR catalyst may extend the full axial length L2 of the second substrate or may extend for less than 100% of the axial length L2. Alternatively, the second SCR catalyst may be incorporated within the second substrate itself, in the form of an extruded, all-active catalyst. In particular, the second substrate may be an active substrate comprising an extrusion of the second SCR catalyst.

In one embodiment, the first substrate is an active substrate comprising an extrusion of the first SCR catalyst and the second substrate is an active substrate comprising an extrusion of the second SCR catalyst and the axial length L1 of the first substrate is less than the axial length L2 of the second substrate. Preferably, the ratio of the axial length of the second substrate to the axial length of the first substrate (i.e. L2:L1) is at least 2:1, preferably at least 2.5:1, more preferably at least 3:1.

The first SCR catalyst comprises an iron (Fe) ion-exchanged molecular sieve having a FER framework as a catalytically active component. The FER Framework type code (defined by the International Zeolite Association) refers to a family of molecular sieves sharing the same structure. FER has a largest pore opening of ten tetrahedral atoms and molecular sieves having this property are referred to in the literature as being "medium pore" molecular sieves. Aluminosilicate molecular sieves are commonly referred to as zeolites. Useful FER isotypes include Ferrierite, [Si-O]-FER, FU-9, ISI-6, Monoclinic ferrierite, NU-23, Sr-D, and ZSM-35. The iron content in the iron ion-exchanged aluminosilicate FER molecular sieve for use in the invention may be in the range 2-7wt% such as 3-6 wt.%. The silica-to-alumina molar ratio (SAR) of the FER molecular sieve may be in the range 10 to 100, preferably 10 to 50. For example, the SAR of the FER molecular sieve may be in the range 30 to 40, such as 35 to 40, or in the range 15 to 25, such as 15 to 20.

In certain embodiments, the Fe-loaded FER molecular sieve is essentially free of any non-framework metal other than Fe.

The first SCR composition may further comprise other components, particularly catalytically inactive components such as binders and other additives. As used herein in relation to the first and second SCR catalysts, a "catalytically active" component is one that directly participates in the catalytic reduction of NOx; and a "catalytically inactive" components is one which does not directly participate in the catalytic reduction NOx. The specific binders or additives employed may depend on the form of the finished catalyst. In particular, the first SCR catalyst may comprise binders and other types of additives such as alumina, zirconia, ceria, silica, mixtures of alumina with zirconia or ceria, ceria coated on alumina, and mixed oxides, such as (non-zeolite) silica-alumina, alumina-zirconia, alumina chromia, and alumina ceria. Where the first SCR catalyst is in the form of an extruded catalyst, the first SCR catalyst may further comprise inorganic fibres.

The second SCR catalyst comprises vanadium as a catalytically active component. The vanadium may be supported on a metal oxide support, such as a support comprising titania. The vanadium may include vanadium as free vanadium, vanadium ion, or an oxide of vanadium or a derivative thereof. For example, the vanadium may be in the form of an oxide, for example vanadium pentoxide (V₂O₅) or a metal vanadate, such as FeVO₄). In addition to vanadium, the second SCR catalyst can include other catalytically active metal oxides such as oxides of tungsten, oxides of niobium, oxides of antimony, oxides of cerium and/or oxides of molybdenum. In a preferred embodiment, the second SCR catalyst further comprises an oxide of antimony. In one embodiment, an oxide of cerium may be present in the second SCR catalyst. Alternatively, cerium may be substantially absent from the second SCR catalyst. In one embodiment, the second SCR catalyst may comprise an oxide of vanadium present in a majority amount (i.e., greater than 50 wt%) relative to other catalytically active metal oxides, such as tungsten oxides and/or antimony oxides. In another embodiment, the second SCR catalyst may comprise an oxide of vanadium present in a minority amount (i.e., less than 50 wt%) relative to other catalytically active metal oxides, such as tungsten oxides.

The vanadium (as V metal) is preferably loaded on a metal oxide support material at a concentration of about 0.5 to about 4 wt% based on total weight of the metal oxide support. The support material for the vanadium component may be titania or titania in combination with another component such as tungsten (VI) oxide, molybdenum oxide, niobium oxide, antimony oxide, or silica as a mixture or as a mixed oxide. For example, a support may be titania doped with W, Si, Mo, Nb, Sb, or combinations thereof. Preferably, the support is titania doped with W and Si. A preferred oxide of titanium is titanium dioxide (TiO₂) which is also known as titania or titanium (IV) oxide and is preferably in the anatase form. In one embodiment, the second SCR catalyst may comprise oxides of titanium and oxides of vanadium in a weight ratio of about 30:1 to about 2:1, more preferably from about 25:1 to about 10:1, and even more preferably from about 22:1 to about 14:1. While both vanadium and the support can be metal oxides, the two components are structurally distinct from each other in that the support is present as discrete particles and the vanadium is present in a relatively thin layer or coating that adheres to the particles. Thus, the vanadium and titania are not present as a mixed oxide.

The first SCR composition may further comprise other components, particularly catalytically inactive components such as binders and other additives. The particular binders or additives employed may depend on the form of the finished catalyst. In particular, the second SCR catalyst may comprise binders and other types of additives such as alumina, zirconia, ceria, silica, mixtures of alumina with zirconia or ceria, ceria coated on alumina, and mixed oxides, such as (non-zeolite) silica-alumina, alumina-zirconia, alumina chromia, and alumina ceria. Where the second SCR catalyst is in the form of an extruded catalyst, the first SCR catalyst may further comprise inorganic fibres.

The second SCR catalyst may be free from molecular sieve materials. The first SCR catalyst may be free from vanadium.

The first and second SCR catalysts may be prepared according to methods known in the art. Where an SCR catalyst is disposed on a substrate, it may be applied to the substrate in the form of a washcoat. A washcoat typically comprises a liquid and a catalytic material. The washcoat may take the form of a solution, slurry or suspension of catalytic material in a solvent. Once coated onto the substrate, the washcoat typically undergoes a calcination step, to remove solvent and to fix the catalytically active material to the substrate.

Where an SCR catalyst is provided within the substrate, the active substrate may be prepared by including the catalytically active component in a composition whose rheological properties have been set so as to be suitable for an extrusion process. This composition is a plastic (i.e. easily shaped or mouldable), viscous composition. To set the desired rheological properties of the composition and also the mechanical properties of the extrudate, binders or additives are typically added to the composition. This plastic composition is then subjected to an extrusion process for preparing, for example, a honeycomb body. The so-called "green" body thus obtained is then subjected to a high temperature calcination treatment to form the finished extruded catalyst body.

The catalyst system according to the first aspect of the present invention may further comprise an ammonia slip catalyst (ASC). An ASC catalyst typically comprises an ammonia oxidation catalyst and an SCR catalyst configured as superimposed layers. Preferably, the ASC is arranged in the catalyst system such that the exhaust gas contacts the first and second SCR catalysts prior to contact with the ASC. For example, the ASC catalyst may be provided on or within a further substrate, arranged downstream of the second SCR catalyst.

Alternatively, an ammonia oxidation catalyst may be applied as a coating on top of or underneath the second SCR catalyst to form an ASC zone. For example, in a first embodiment, where the second SCR catalyst is disposed on a substrate as a coating, the ammonia oxidation catalyst may be disposed on the same substrate as a coating applied on top of or underneath the coating comprising the second SCR catalyst. In a second embodiment, the second SCR catalyst may be provided as active substrate comprising an extrusion of the second SCR catalyst and an ammonia oxidation catalyst may be disposed on the active substrate as a coating. In either the first of second embodiment, the ammonia oxidation catalyst may be disposed on the substrate as a coating extending from the outlet end to less than the axial length of the substrate, for example, up to 50% of the axial length.

In a particular embodiment, the first SCR catalyst, the second SCR catalysts and the ammonia oxidation catalyst are provided on or within the same substrate, wherein the substrate is an active substrate comprising an extrusion of the second SCR catalyst and the first SCR catalyst is disposed on the active substrate as a coating extending from the inlet end for less than 100% of the axial length of the substrate, such as from 5 to 50%, preferably 10 to 30% of the axial length, and the ASC catalyst is disposed on the active substrate as a coating extending from the outlet end for less than 100% of the axial length of the substrate, such as from 5 to 50%, preferably 10 to 30% of the axial length (for example, see Figure 5).

The exhaust system according to the second aspect includes a source of nitrogen containing reducing agent. The source of nitrogen containing reducing agent may be disposed upstream of the catalyst system. Preferably the upstream source of nitrogenous reductant is an ammonia or ammonia pre-cursor (e.g. urea) injector disposed upstream of the first SCR catalyst. The exhaust system may include a controller for metering the injection of nitrogenous reductant into the flowing exhaust gas.

The exhaust system may include additional upstream components, such as additional catalytic components. For example, an oxidation catalyst (for example a diesel oxidation catalyst (DOC)) may be located upstream of the point of injecting the nitrogenous reductant into the exhaust gas. The catalyst system according to the first aspect of the present invention can promote the reaction of a nitrogenous reductant, preferably ammonia, with nitrogen oxides to selectively form elemental nitrogen (N₂) and water (H₂O) whilst achieving low N₂O selectivity. The method and use of according to the third and fourth aspects of the present invention may achieve a NOₓ (NO and/or NO₂) conversion of at least 75%, preferably at least 80%, more preferably at least 90% and an N₂O selectivity of less than 10%, preferably less than 5%, more preferably less than 2% over a broad temperature range (e.g. 150 to 700°C, for example from 200 to 650°C or 250 to 500°C), where N₂O selectivity = (N₂O in gas exiting the system - N₂O in gas entering the system)/NOₓ conversion.

### Examples

The present disclosure will now be further described with reference to the following examples, which are illustrative, but not limiting of the invention.

SCR catalysts were prepared according to the following procedures.

### • Catalyst (i) - Extruded vanadium-based SCR catalyst

Powdered silica-stabilised titania, ammonia meta vanadate and an antimony salt were combined with clay minerals and glass fibres and then cellulose, a plasticizer/extrusion aid (for example, an oleic acid, or a glycol) and a polyethylene oxide at room temperature to form a mouldable paste. The solids content of the paste was set such that its rheological properties were suitable for extrusion. The quantitative proportions of the starting materials were selected such that the final solid catalyst body contained around 4% V₂O₅.

The mouldable paste was extruded at 20°C into a flow-through honeycomb having a circular cross-section of 1 inch diameter and a cell density of 400 cpsi (cells per square inch). The extruded honeycomb was freeze dried for several hours at 2 mbar according to the method described in WO 2009/080155 and then calcined at a temperature of 500-650°C in a lab scale muffle oven to form a solid catalyst body.

### • Catalyst (ii) - Washcoated Fe-FER catalyst

A commercially available Fe-exchanged FER having an iron content of 3wt% and SAR of 17.5 was combined with a boehmite binder in an aqueous solvent to form a slurry. The slurry was applied to substrates via a conventional vacuum deposition washcoating technique (as described in WO99/47260). The coated substrates were then dried to complete dryness using a dynamicline drier. The dried coated substrates were then calcined on a dynamic line calciner at 500°C for at least 30 minutes to form a catalyst layer on the substrate. The quantitative proportions of the starting materials were such that the final coated catalyst contained around 88wt% of the Fe-exchanged FER.

### • Catalyst (iii) - Extruded Fe-MFI/vanadium blend catalyst

An iron exchanged MFI aluminosilicate was blended with a V₂O₅ - TiO₂/WO₃ suspension. The resulting composition contained about 20 weight percent iron exchanged MFI aluminosilicate based on the combined weight of the iron exchanged MFI aluminosilicate and V₂O₅ - TiO₂/WO₃ solids. The catalyst blend was combined with clay minerals, glass fibres and organic components similar to those employed in the preparation of Catalyst (i) to form an mouldable paste which was extruded at 20°C into a flow-through honeycomb having a circular cross-section of 1 inch diameter and a cell density of 400 cpsi (cells per square inch). The extruded honeycomb was freeze dried for several hours at 2mbar according to the method described in WO 2009/080155 and then calcined at a temperature of 500-650°C in a lab scale muffle oven to form a solid catalyst body.

### • Catalyst (iv) - Washcoated Fe-BEA catalyst

A commercially available BEA zeolite was combined with iron nitrate, alumina and organic additives in an aqueous solvent to form a slurry. The slurry was applied to substrates via a conventional vacuum deposition washcoating technique (as described in WO99/47260). The coated substrates were then dried to complete dryness using a dynamicline drier. The dried coated substrates were then calcined on a dynamic line calciner at 500°C for at least 30 minutes to form a catalyst layer on the substrate comprising an Fe-loaded BEA zeolite having an iron content of around 4.4wt%. The quantitative proportions of the starting materials were such that the final catalyst layer had an Fe content of 3.7wt%.

### • Catalyst (v) - Washcoated Fe-MFI catalyst

A commercially available Fe-exchanged MFI having an iron content of 5wt% and SAR of 36 was combined with a boehmite binder in an aqueous solvent to form a slurry. The slurry was applied to a substrates via a conventional vacuum deposition washcoating technique (as described in WO99/47260). The coated substrates were then dried to complete dryness using a dynamicline drier. The dried coated substrates were then calcined on a dynamic line calciner at 500°C for at least 30 minutes to form a catalyst layer on the substrate. The quantitative proportions of the starting materials were such that the catalyst layer contained around 9 wt% of Fe-loaded MFI zeolite.

### • Two-brick catalyst Systems

Various catalyst systems each comprising two catalysed substrates arranged in series were prepared. A first catalyst was arranged in the upstream position and a second catalyst was arranged in the downstream position. Where Catalysts (ii) and (iv) were employed they were prepared using inert (non-catalytically active) ceramic substrates, having a circular cross-section of 1 inch diameter and a cell density of 400 cpsi (cells per square inch), and the coating was applied along the full axial length. Where Catalysts (i) and (iii) were employed, only the bare active extruded substrates were employed (i.e. no further catalytic coatings were applied). The length of each substrate and the identity of the catalyst are shown in Table 1. The total axial length of both the upstream substrate and downstream substrate was 3 inches in all cases. A reference catalyst system (System A) comprising only Catalyst (i) as a single active substrate having an axial length of 3 inches was prepared for comparison purposes.

**Table 1**

| System | Length of upstream substrate (inches) | Length of downstream substrate | Upstream Catalyst | Downstream Catalyst |
|---|---|---|---|---|
| A | 3 | - | (i) | - |
| 1 | 1 | 2 | (ii) | (i) |
| 2 | 0.4 | 2.6 | (ii) | (i) |
| B | 0.4 | 2.6 | (iii) | (i) |
| C | 0.4 | 2.6 | (iv) | (i) |
| D | 2 | 1 | (i) | (ii) |

### • Single brick catalyst systems

Various catalyst systems each comprising a single substrate were prepared. In all cases the substrate was an active substrate comprising Catalyst (i) and having an axial length of 3 inches with a coating comprising either Catalyst (ii) or Catalyst (v) either partially or fully coated along the axial length. The identity, length and position of the coating in each system is shown in Table 2 below.

**Table 2**

| System | Catalyst applied as coating | Length of coating (inches) | Position of coating |
|---|---|---|---|
| 3 | (ii) | 1 | Inlet end |
| E | (ii) | 1 | Outlet end |
| 4 | (ii) | 3 | Full length |
| 5 | (v) | 1.2 | Inlet end |

### • Catalyst system testing

Catalyst systems A to E and 1 to 5 were tested in a synthetic catalytic activity test (SCAT) apparatus using the following inlet gas mixture at selected inlet gas temperatures: 300ppm NO (0% NO₂), 300ppm NH₃ (Ammonia to NOx ratio (ANR) = 1.0), 9.3% O₂, 7% H₂O, balance N₂, space velocity (SV) of 120000h⁻¹.

The results are shown in Figures 6 to 9.

Figure 6 shows NOₓ conversion rates achieved by Systems 1, 2 (according to the invention) and 5 (not according to the invention) and Comparative Systems A, B and C at the selected inlet temperatures.

Figure 7 shows N₂O selectivity achieved by Systems 1, 2 (according to the invention) and 5 (not according to the invention) and Comparative Systems A, B and C at the selected inlet temperatures.

Figure 8 shows NOₓ conversion rates achieved by Systems 3 and 4 (according to the invention) and Comparative Systems D and E at the selected inlet temperatures.

Figure 9 shows N₂O selectivity achieved by Systems 3 and 4 (according to the invention) and Comparative Systems D and E at the selected inlet temperatures.

For comparison purposes, the results generated for System 1 and Comparative System A are also reproduced in Figures 8 and 9.

As demonstrated by the data shown in Figures 6 to 9, at temperatures of at least 400°C, catalyst systems 1 to 4 according to the present invention achieve comparable or even improved NOₓ conversions and significantly reduced N₂O selectivity compared to comparative catalyst systems A to E. Further, it can be seen by comparing catalyst systems 1, 2, 3 and 4 that different configurations of the catalyst system may also influence the performance achieved.

## Claims

1. A catalyst system for treatment of an exhaust gas comprising:
• a first SCR catalyst comprising an iron (Fe) ion-exchanged molecular sieve having a ferrierite (FER) framework, wherein the first SCR catalyst is provided on or within a substrate comprising an inlet end and an outlet end and having an axial length; and
• a second SCR catalyst comprising vanadium, wherein the second SCR catalyst is provided on or within a substrate comprising an inlet end and an outlet end and having an axial length;
wherein the first and second catalysts are arranged such that in use exhaust gas contacts the first SCR catalyst prior to contact with the second SCR catalyst.

2. A catalyst system as claimed in claim 1 wherein the first and second SCR catalysts are provided on or within the same substrate.

3. A catalyst system as claimed in claim 2 wherein the first SCR catalyst is provided on or within the substrate in an upstream zone, and the second SCR catalyst is provided on or within the substrate in a downstream zone.

4. A catalyst system as claimed in any of claims 1 to 2 wherein the first SCR catalyst is disposed on the substrate as a layer coated on top of the second SCR catalyst.

5. A catalyst system as claimed in claim 4 wherein the second SCR catalyst is disposed on the substrate as a coating and the first SCR catalyst is disposed on the substrate as a coating applied on top of the coating comprising the second SCR catalyst.

6. A catalyst system as claimed in claim 4 wherein the substrate is an active substrate comprising an extrusion of the second SCR catalyst and the first SCR catalyst is disposed on the active substrate as a coating.

7. A catalyst system as claimed in claims 4, 5 or 6, wherein the coating comprising the first SCR catalyst extends from the inlet end of the substrate for less than 100% of the axial length of the substrate.

8. A catalyst system as claimed in claim 1 wherein the first SCR catalyst is provided on or within a first substrate having axial length L1 and the second SCR catalyst is provided on or within a second substrate having axial length L2, wherein the first substrate is arranged upstream of the second substrate with respect to normal exhaust gas flow through the system

9. A catalyst system as claimed in claim 8 wherein the ratio of the axial length of the second substrate to the axial length of the first substrate (L2:L1) is at least 1.5 to 1, preferably at least 3:1, more preferably at least 5:1 or at least 6:1 and is less than 10:1, preferably less than 8:1.

10. A catalyst system as claimed in claim 8 or 9 wherein the first SCR catalyst is disposed on the first substrate as a coating and the second substrate is an active substrate comprising an extrusion of the second SCR catalyst

11. A catalyst system as claimed in any preceding claim wherein the silica-to-alumina molar ratio (SAR) of the iron ion-exchanged molecular sieve is in the range 10 to 100, preferably 10 to 50, more preferably 35 to 40 or 15 to 20.

12. A catalyst system as claimed in any preceding claim which further comprises an ammonia slip catalyst (ASC) arranged such that, in use, exhaust gas contacts the first and second SCR catalysts prior to contact with the ASC.

13. A method of treating an exhaust gas comprising contacting a mixture of an exhaust gas comprising nitrogen oxides and a nitrogen-containing reducing agent with the catalyst system as claimed in any preceding claim.

14. An exhaust system comprising a source of nitrogen containing reducing agent and a catalyst system as claimed in any of claims 1 to 12.

## Patentansprüche

1. Katalysatorsystem zum Behandeln eines Abgases, umfassend:
• einen ersten SCR-Katalysator, der ein ionenausgetauschtes Eisen(Fe)-Molekularsieb mit einem Ferrierit(FER)-Gerüst umfasst, wobei der erste SCR-Katalysator auf oder in einem Substrat bereitgestellt ist, das ein Einlassende und ein Auslassende umfasst und eine axiale Länge aufweist; und
• einen zweiten SCR-Katalysator, der Vanadium umfasst, wobei der zweite SCR-Katalysator auf oder in einem Substrat bereitgestellt ist, das ein Einlassende und ein Auslassende umfasst und eine axiale Länge aufweist;
wobei der erste und der zweite Katalysator so angeordnet sind, dass das Abgas im Betrieb mit dem ersten SCR-Katalysator in Kontakt kommt, bevor es mit dem zweiten SCR-Katalysator in Kontakt kommt.

2. Katalysatorsystem nach Anspruch 1, wobei der erste und der zweite SCR-Katalysator auf oder innerhalb desselben Substrats vorgesehen sind.

3. Katalysatorsystem nach Anspruch 2, wobei der erste SCR-Katalysator auf oder innerhalb des Substrats in einer stromaufwärtigen Zone vorgesehen ist und der zweite SCR-Katalysator auf oder innerhalb des Substrats in einer stromabwärtigen Zone vorgesehen ist.

4. Katalysatorsystem nach einem der Ansprüche 1 bis 2, wobei der erste SCR-Katalysator auf dem Substrat als eine Schicht angeordnet ist, die auf den zweiten SCR-Katalysator aufgetragen ist.

5. Katalysatorsystem nach Anspruch 4, wobei der zweite SCR-Katalysator als Beschichtung auf dem Substrat angeordnet ist und der erste SCR-Katalysator als Beschichtung auf dem Substrat angeordnet ist, die auf die Beschichtung aufgebracht ist, die den zweiten SCR-Katalysator umfasst.

6. Katalysatorsystem nach Anspruch 4, wobei das Substrat ein aktives Substrat ist, das eine Extrusion des zweiten SCR-Katalysators umfasst, und der erste SCR-Katalysator als Beschichtung auf dem aktiven Substrat angeordnet ist.

7. Katalysatorsystem nach Anspruch 4, 5 oder 6, wobei sich die Beschichtung, die den ersten SCR-Katalysator umfasst, vom Einlassende des Substrats über weniger als 100 % der axialen Länge des Substrats erstreckt.

8. Katalysatorsystem nach Anspruch 1, wobei der erste SCR-Katalysator auf oder in einem ersten Substrat mit der axialen Länge L1 und der zweite SCR-Katalysator auf oder in einem zweiten Substrat mit der axialen Länge L2 angeordnet ist, wobei das erste Substrat in Bezug auf den normalen Abgasstrom durch das System stromaufwärts des zweiten Substrats angeordnet ist.

9. Katalysatorsystem nach Anspruch 8, wobei das Verhältnis der axialen Länge des zweiten Substrats zur axialen Länge des ersten Substrats (L2:L1) mindestens 1,5 zu 1, vorzugsweise mindestens 3:1, stärker bevorzugt mindestens 5:1 oder mindestens 6:1 beträgt und kleiner als 10:1, vorzugsweise kleiner als 8:1 ist.

10. Katalysatorsystem nach Anspruch 8 oder 9, wobei der erste SCR-Katalysator als Beschichtung auf dem ersten Substrat angeordnet ist und das zweite Substrat ein aktives Substrat ist, das eine Extrusion des zweiten SCR-Katalysators umfasst.

11. Katalysatorsystem nach einem der vorhergehenden Ansprüche, wobei das Siliciumdioxid-zu-Aluminiumoxid-Molverhältnis (SAR) des eisenionenausgetauschten Molekularsiebs im Bereich von 10 bis 100, vorzugsweise 10 bis 50, stärker bevorzugt 35 bis 40 oder 15 bis 20 liegt.

12. Katalysatorsystem nach einem der vorhergehenden Ansprüche, das außerdem einen Ammoniak-Schlupfkatalysator (ASC) umfasst, der so angeordnet ist, dass das Abgas im Betrieb mit dem ersten und zweiten SCR-Katalysator in Kontakt kommt, bevor es mit dem ASC in Kontakt kommt.

13. Verfahren zum Behandeln eines Abgases, bei dem man ein Gemisch aus einem Stickoxide und ein stickstoffhaltiges Reduktionsmittel enthaltenden Abgas mit dem Katalysatorsystem nach einem der vorhergehenden Ansprüche in Kontakt bringt.

14. Abgassystem, umfassend eine Quelle eines stickstoffhaltigen Reduktionsmittels und ein Katalysatorsystem nach einem der Ansprüche 1 bis 12.

## Revendications

1. Système catalytique de traitement d'un gaz d'échappement comprenant :
• un premier catalyseur SCR comprenant un tamis moléculaire qui a subi un échange d'ions fer (Fe) ayant une structure de ferriérite (FER), dans lequel le premier catalyseur SCR est placé sur ou dans un substrat comprenant une extrémité d'entrée et une extrémité de sortie et ayant une longueur axiale ; et
• un second catalyseur SCR comprenant du vanadium, dans lequel le second catalyseur SCR est placé sur ou dans un substrat comprenant une extrémité d'entrée et une extrémité de sortie et ayant une longueur axiale ;
dans lequel les premier et second catalyseurs sont agencés de telle sorte qu'en cours d'utilisation, les gaz d'échappement entrent en contact avec le premier catalyseur SCR avant d'entrer en contact avec le second catalyseur SCR.

2. Système catalytique selon la revendication 1, dans lequel les premier et second catalyseurs SCR sont placés sur ou dans le même substrat.

3. Système catalytique selon la revendication 2, dans lequel le premier catalyseur SCR est placé sur ou dans le substrat dans une zone en amont, et le second catalyseur SCR est placé sur ou dans le substrat dans une zone en aval.

4. Système catalytique selon l'une quelconque des revendications 1 à 2, dans lequel le premier catalyseur SCR est disposé sur le substrat en tant que couche revêtue par-dessus le second catalyseur SCR.

5. Système catalytique selon la revendication 4, dans lequel le second catalyseur SCR est disposé sur le substrat en tant que revêtement et le premier catalyseur SCR est disposé sur le substrat en tant que revêtement appliqué par-dessus le revêtement comprenant le second catalyseur SCR.

6. Système catalytique selon la revendication 4, dans lequel le substrat est un substrat actif comprenant une extrusion du second catalyseur SCR et le premier catalyseur SCR est disposé sur le substrat actif en tant que revêtement.

7. Système catalytique selon les revendications 4, 5 ou 6, dans lequel le revêtement comprenant le premier catalyseur SCR s'étend à partir de l'extrémité d'entrée du substrat sur moins de 100 % de la longueur axiale du substrat.

8. Système catalytique selon la revendication 1, dans lequel le premier catalyseur SCR est placé sur ou dans un premier substrat ayant une longueur axiale L1 et le second catalyseur SCR est placé sur ou dans un second substrat ayant une longueur axiale L2, dans lequel le premier substrat est agencé en amont du second substrat par rapport à l'écoulement normal de gaz d'échappement à travers le système

9. Système catalytique selon la revendication 8, dans lequel le rapport entre la longueur axiale du second substrat et la longueur axiale du premier substrat (L2:L1) est d'au moins 1,5 à 1, de préférence d'au moins 3:1, plus préférablement d'au moins 5:1 ou d'au moins 6:1 et est inférieur à 10:1, de préférence inférieur à 8:1.

10. Système catalytique selon la revendication 8 ou 9, dans lequel le premier catalyseur SCR est disposé sur le premier substrat en tant que revêtement et le second substrat est un substrat actif comprenant une extrusion du second catalyseur SCR

11. Système catalytique selon l'une quelconque revendication précédente, dans lequel le rapport molaire silice/alumine (SAR) du tamis moléculaire qui a subi un échange d'ions fer est compris dans la plage de 10 à 100, de préférence 10 à 50, plus préférablement 35 à 40 ou 15 à 20.

12. Système catalytique selon l'une quelconque revendication précédente, qui comprend en outre un catalyseur d'élimination de fuite d'ammoniac (ASC) agencé de telle sorte qu'en cours d'utilisation, le gaz d'échappement entre en contact avec les premier et second catalyseurs SCR avant d'entrer en contact avec l'ASC.

13. Procédé de traitement d'un gaz d'échappement comprenant la mise en contact d'un mélange de gaz d'échappement comprenant des oxydes d'azote et un agent réducteur contenant de l'azote avec le système catalytique selon l'une quelconque revendication précédente.

14. Système d'échappement comprenant une source d'azote contenant un agent réducteur et un système catalytique selon l'une quelconque des revendications 1 à 12.
